# EUROPEAN PATENT SPECIFICATION

(11) **EP 1 319 436 B1**
(45) Date of publication and mention of the grant of the patent: **15.04.2009**
(21) Application number: 01963454.2
(22) Date of filing: 06.09.2001
(51) Int. Cl.: B01J 23/02, B01J 23/42, B01J 23/44, B01D 53/94, B01J 23/48

(54) **METHOD FOR PRODUCING CATALYST BODY AND CARRIER HAVING ALUMINA CARRIED THEREON**
VERFAHREN ZUR HERSTELLUNG EINES KATALYSATORKÖRPERS UND ALUMINIUM TRAGENDEN TRÄGERS
PROCEDE DE PRODUCTION D'UN CORPS CATALYTIQUE ET SUPPORT PORTEUR D'ALUMINE

(30) Priority: 08.09.2000 JP 2000274110; 13.06.2001 JP 2001179248
(43) Date of publication of application: 18.06.2003
(73) Proprietor: NGK INSULATORS, LTD., Nagoya-shi, Aichi 467-8530 (JP)
(72) Inventor: NODA, Naomi NGK INSULATORS, LTD., Nagoya-shi, Aichi 467-8530 (JP); SUZUKI, Junichi NGK INSULATORS, LTD., Nagoya-shi, Aichi 467-8530 (JP); YAMADA, Kanji NGK INSULATORS, LTD., Nagoya-shi, Aichi 467-8530 (JP)
(74) Representative: Paget, Hugh Charles Edward
(86) International application number: PCT/JP2001/007717
(87) International publication number: WO 2002/020154

(56) References cited:
- EP-A- 0 009 906
- EP-A- 0 329 302
- EP-A- 0 387 611
- EP-A- 0 657 204
- EP-A- 1 112 774
- JP-A- 5 184 926
- JP-A- 9 192 487
- JP-A- 09 192 487
- JP-A- 10 225 642
- JP-A- 10 225 642
- JP-A- 55 041 894
- US-A- 4 207 169
- US-A- 4 369 132
- US-A- 5 492 880
- US-A- 5 874 057

## Description

### Technical Field

The present invention relates to a method for producing a catalyst comprising a cordierite carrier
and, supported on the carrier, a lager of a catalyst material containing an alkali metal and/or an alkaline earth metal, particularly, Li, Na, K or Ca. An example of the catalyst material is an NOₓ trap catalyst for purifying automobile exhaust gas. The invention seeks to suppress the deterioration of the carrier caused by an alkaline metal and/or an alkaline earth metal to enable extended periods of use. The invention also resates to a method for producing the cat alyst.

### Background Art

Emission control has been tightened in recent years, so that a lean burn engine and a direct-injection engine have become prevalent, and an NOₓ trap catalyst capable of effectively purifying NOₓ in exhaust gas in a lean atmosphere has been commercialized. As an NOₓ occluding component used for the NOₓ trap catalyst, alkali metals such as K, Na, Li and Cs, alkaline earth metals such as Ba and Ca, rare earths such as La and Y and the like are known. In particular, Ba has been widely used from the beginning of the commercialization of the NOₓ trap catalyst. Addition of K, which has good NOₓ occluding capability, has been tried recently.

Incidentally, the NOₓ trap catalyst is typically composed of a catalyst material containing the above-described NOₓ occluding component supported by a carrier made of an oxide-based ceramic material such as cordierite or a metallic material such as a Fe-Cr-Al alloy. These carriers have problems of being corroded and easily deteriorated by alkali metals and a part of alkaline earth metals activated in a high temperature of exhaust gas, particularly, by Li, Na, K and Ca. In particular, in the case of a cordierite carrier composed of an oxide-based ceramic material, there are serious problems such as occurrence of crack by reacting with the above-described alkali metals or the like.

For an exhaust gas purification catalyst, an activated alumina has been used for a supporting base material having a high specific surface area for highly dispersing catalytically active components typified by precious metals. However, an object of the present invention is different in that a catalyst supporting a catalyst material containing an alkali metal and/or an alkaline earth metal on a carrier is applied with an alumina basecoat on the carrier before supporting the catalyst material to protect the carrier represented by a cordierite honeycomb from coming into contact with an alkali metal and/or an alkaline earth metal in a catalyst layer and by extension to protect it from the reaction with them.

EP-A-1112774 published on 4 July 2007 discloses a catalyst body comprising a porous carrier and a catalyst layer containing an alkali metal and/or alkaline earth metal loaded on the carrier. Cordierite is an example of the material of the carrier. An anchor substance, of which an example is Al, may be incorporated in a layer between the carrier and the catalyst layer. The anchor substance may be in the form of an oxide.

### Disclosure of the Invention

The present invention has been completed in view of these conventional problems, and it is an object of the present invention to provide a catalyst carrying a catalyst material containing an alkali metal and/or an alkaline earth metal such as an NOₓ trap catalyst, in which the deterioration of the carrier by an alkali metal and/or an alkaline earth metal is suppressed, to enable extended periods of use.

According to the present invention, there is provided a catalyst as set out in claim 1.

Further, there is provided a method for producing the catalyst of the invention, as for not in claim 8.

### Embodiments of the Invention

In the present invention, the alumina having a low reactivity to an alkali metal and/or an alkaline earth metal to be used for a catalyst material is incorporated into

the body of a carrier or placed between the carrier and the catalyst material in advance. By constituting the catalysts like this, the carrier is protected from an alkali metal and/or an alkaline earth metal by the alumina to suppress the reaction with them, resulting in suppressing the deterioration, even if the catalyst is exposed to high temperatures during use.

Alumina is known to have various phases. Stability is important in the present invention, and the alumina used comprises at least one of γ-alumina, δ-alumina, η-alumina, θ-aluma and α -alumina . Generally, α-alumina is preferred in terms of high corrosion resistance in some use environment, amorphous alumina is preferred in terms of easy formation of a dense protective coat, and γ-alumina is preferred in terms of a good affinity for the catalyst material. Surprisingly, in either case, when an alumina layer having a desired thickness is formed, a desired effect can be exerted substantially without depending on types of the alumina phase.

The form of alumina when it is supported (incorporated or placed) into a carrier may be alone or may be a compound or a mixture with other materials. However, from the viewpoint of corrosion resistance, alumina is preferably included in 90 wt% or higher, more preferably substantially alumina alone (only alumina is placed). When other components are compounded and/or mixed, it is preferable to select those having high corrosion resistance in itself to alkali metals and/or alkaline earth metals or those having the effect to enhance corrosion resistance or heat resistance of alumina. The concrete sources of alumina includes, from the relation with the supporting technique, for example, the oxide and the like when alumina is to be supported by a solid (powder), and various solutions or dispersions (generally referred to "alumina source-containing liquid" herein below) of the nitrate, the sulfate, the hydroxide, the chloride, the organic salt, the alumina sol and the like when alumina is supported by liquid (solution or dispersion). Particularly, the form of the alumina source, in which no components other than alumina remain in the catalyst by the treatment such as firing, is preferred. The method for placing alumina in a carrier and/or between the carrier and a catalyst material includes methods below.

### A method for placing alumina in a carrier

By immersing a carrier in an alumina source-containing liquid having a low viscosity, it is possible to cause the liquid to permeate into a so-called virgin carrier, which has not been coated with a catalyst or the like, to place the alumina source in the carrier. This method is used for a porous carrier, enabling the alumina source to be introduced to the surface of open pores. The technique of immersing the carrier in the alumina source-containing liquid is effective from the viewpoint of suppressing the exposure of the carrier material or the contact with an alkali metal and/or an alkaline earth metal in the catalyst material.

### A method for placing an alumina-containing intermediate layer between a carrier and a catalyst material

As a specific technique, the solution or dispersion having a relatively high viscosity containing an alumina sol can be used for coating a carrier to place alumina as an intermediate layer between the carrier and a layer comprising a catalyst material exerting desired effect. The alumina sol is preferably used for an alumina source in an amount 50% by weight or more of the total as the solid content, more preferably 90% by weight or more, in terms of easily forming a dense intermediate layer. Most preferably, substantially only alumina sol is used. Further examples may include a technique for forming slurry of alumina powders or the like and washcoating to form the intermediate layer, and a technique for adding the alumina sol when forming slurry, which is preferred in terms of preventing peeling of the intermediate layer. When the alumina powders are used, those of various phases are suitably used as described above. Incidentally, since the carrier is porous , part of the solution or the dispersion sometimes penetrate into the carrier through open pores and the like when coating, but it is not a problem.

The technique to support (place) alumina in a carrier and/or between the carrier and a catalyst material is not limited to these, but, in any case, preferably, alumina is first fixed by firing at a temperature of 200 °C or above at a step where the alumina is supported or the like, and thereon there is then provided a layer comprising a catalyst material exerting a desired effect, for example, an NOₓ trap catalyst material containing an alkaline metal and/or alkaline earth metal. When an alumina source other than alumina itself is used for supporting alumina, the firing is preferably carried out at a temperature where the used alumina source decomposes or is oxidized to produce alumina or above.

In addition, it is also possible to cause a desired alumina phase to be developed by controlling the firing temperature. For example, when the α-phase having high corrosion resistance is desired, an α-alumina powder may be coated as a raw material. However, it is also a preferred technique in terms of forming a dense α-alumina phase to facilitate change into the α-phase by supporting the alumina having another phase such as γ-alumina, followed by firing it at a temperature of 1000 °C or above in an air atmosphere. A temperature of 1100 °C or above is more preferable since the change into the α-phase is accelerated. It is also a preferred form that the whole is the α-phase after firing. On the other hand, firing at 700 °C or below is preferable when γ-phase is desired. The control of the alumina phase by the firing temperature is possible at a firing step after the washcoat of a catalyst material. In this case, the firing after the washcoat of a catalyst material also preferably serves as the firing after supporting alumina to simplify steps, but the temperature that can be set needs to be within the range where the catalyst material does not deteriorate.

The supporting of alumina may be carried out in two or more times, if needed. In this case, two or more times of impregnation or coating may be repeated interposing a drying step, followed by firing lastly, or the firing may be applied not only lastly but also between the two or more times of impregnation or coating. Alumina sources, alumina phases, supporting methods, firing conditions and the like may be the same or different for these two or more times. A suitable example may include, for example, impregnating or coating an alumina source followed by firing at a temperature of 1100 °C or above to form a dense α-phase in the first supporting, and impregnating or coating an alumina source followed by firing at a temperature of 700 °C or below to allow to better fit with the catalyst material to be supported thereon in the subsequent second supporting.

The shape of the carrier to be used for the catalyst of the present invention is not particularly limited, and the above-described effect for suppressing deterioration can be achieved upon using the carrier having any shape such as a monolith honeycomb, a pellet, a bead, a ring, and foam. In particular, using a carrier having a honeycomb shape (honeycomb carrier) composed of numbers of through-holes (cells) partitioned by thin partition walls provides the greatest effect.

The material used for the honeycomb carrier is cordierite. The carrier comprising cordierite easily reacts with Li, Na, K and Ca.

The shape of through-holes (the shape of cells) of the honeycomb carrier may be any shape such as a circle, a polygon and a corrugated type. The outer shape of the honeycomb carrier may be a specific shape suitable for the inner shape of the exhaust system to be installed.

Although the cell density of the honeycomb carrier is also not limited, the cell density in the range of 6 to 1500 cells/square inch (0.9 to 233 cells/cm²) is preferred for the carrier of a catalyst. The partition wall preferably has a thickness in the range of 20 to 2000 µm. For the thin wall having a thickness of 20 to 200 µm, an alkali metal and/or an alkaline earth metal easily diffuses from the catalyst material to the center of the wall thickness of the carrier, so that the necessity of the present invention becomes high and the effect for suppressing deterioration increases. The honeycomb carrier has a high porosity of 10% or higher, further 20% or higher. An alkali metal and/or an alkaline earth metal easily diffuses through open pores, so that the effect of the present invention becomes high and the effect for suppressing deterioration increases.

The amount of alumina to be incorporated into the body of the carrier is preferably from 0.5 to 200 g/L per unit volume of a catalyst. When it is below 0.5 g/L, the effect for suppressing carrier deterioration is small, and when supported on the same carrier as an NOₓ trap catalyst in an amount more than 200 g/L, cells may be clogged in the case a honeycomb carrier is used. The amount of alumina is preferably in the range of 10 to 100 g/L, more preferably in the range of 40 to 80 g/L. In particular, in terms of balancing the prevention of the occurrence of cracks and the prevention of the reduction of the bending strength with a pressure drop, the amount of alumina is preferably in the range of 40 to 80 g/L. Note that the amount of alumina naturally does not include the amount of the alumina to be used for a supporting material having a high specific surface area for highly dispersing the catalytically active components exemplified by precious metals.

The alumina layer to be formed on the carrier has a thickness after firing in the cross section perpendicular in the axial direction of the carrier of 20 µm or less, preferably 10 µm or less when one side of the partition wall is measured at about the center of one side of a cell using an electron microscope. The thickness exceeding 20 µm is not preferred due to the increase of pressure drop.

The particles of alumina sol have an average particle diameter of 100 µm or less, preferably 40 µm or less, more preferably 20 µm or less.

The coating solution has a viscosity of generally 10000 mPa.s or below, preferably 500 mPa.s or below, more preferably 30 mPa.s or below. The viscosity exceeding 10000 mPa.s may cause coating difficult in the case of the carrier having a honeycomb body. The viscosity exceeding 500 mPa.s may cause clogging for some carrier to be used, which requires a caution. The viscosity of 30 mPa.s or below preferably causes appropriate penetration also into the pores of a carrier to form a dense adherent alumina layer.

The alumina sol has a pH of generally 2.0 to 6.0, preferably 3.0 to 5.0. The pH below 2.0 is not preferable, because when the material of the carrier is not acid resistant, it can corrode by immersing in coating liquid. The pH exceeding 6.0 is not preferable because the particles in the sol can cohere.

Other metals may be included in the alumina layer within the range that does not impair the action of alumina according to the present invention. The alumina layer naturally does not include any precious metals or other catalysts. In order to effectively protect the carrier from an alkali metal and/or an alkaline earth metal or the like, more preferably, the alumina layer is formed as an individual layer between the carrier and the catalyst layer containing at least an alkali metal and/or an alkaline earth metal. In other words, substantially only alumina layer is preferably formed between the carrier and the catalyst layer containing an alkali metal and/or an alkaline earth metal. The catalyst layer may naturally include the catalyst other than a so-called NOₓ catalyst, for example, precious metals such as Pt, Pd and Rh for firing hydrocarbon and the like. The catalyst layer including precious metals such as Pt, Pd and Rh may naturally be formed separately on the NOₓ catalyst layer.

The catalyst according to the present invention can also be applied together with other purification materials to be applied to an exhaust gas system, such as an NOₓ trap catalyst material consisting of different components, another catalyst material typified by a three way catalyst, an auxiliary catalyst typified by oxides of Ce and/or Zr and a HC adsorbent. In these cases, they may be mixed with the catalyst material of the catalyst according to the present invention, but supporting by overlapping in a layered form is more preferred in terms of enhancing heat resistance. Further, the catalyst material of the catalyst according to the present invention may be used in an exhaust system as appropriate in combination with those provided as a separate body.

The present invention will now be described based on examples, but the present invention is not limited by these

### examples.

### [Preparation of a slurry for loading alumina]

### Slurry A for loading alumina:

A commercially available γ-Al₂O₃ powder (specific surface area: 200 m²/g) was added with commercially available Al₂O₃ sol and water and wet-milled in a pot mill to prepare slurry A for loading alumina. The Al₂O₃ sol was added in the amount to provide a solid content (weight of Al₂O₃ contained in Al₂O₃ sol) of 10% by weight of total Al₂O₃ on Al₂O₃ basis. The water was added as appropriate so as to provide the slurry with a viscosity suitable for washcoating. Slurry B for loading alumina:
Slurry B for loading alumina was obtained in a similar manner to the slurry A for loading alumina except using an α-Al₂O₃ powder instead of the commercially available γ-Al₂O₃ powder.

### [Preparation of a slurry for wash-coating the NOₓ trap catalyst]

A commercially available γ-Al₂O₃ powder (specific surface area: 200 m²/g) was immersed in a mixed solution of (NH₃)₂Pt(NO₂)₂ aqueous solution with KNO₃ aqueous solution, and the solution was pulverized for two hours in a pot mill. The solution was dried up by evaporating water, subjected to dry crushing and calcined in an electric furnace for three hours at 600 °C. The thus obtained (Pt + K)-pre-doped γ-Al₂O₃ powder was added with commercially available Al₂O₃ sol and water and wet-milled again in a pot mill to prepare washcoating slurry. The relation of the amount of γ-Al₂O₃ to the amount of Pt and K was adjusted at the step of mixing and immersion, such that Pt is 30 g/cft (1.06 g/L) (weight based on Pt element per honeycomb volume) and K is 20 g/L (weight based on K element per honeycomb volume), when the supporting amount of an NOₓ trap catalyst is 100 g/L (per honeycomb volume) at the step where the honeycomb carrier is applied with washcoating and finally burned. The Al₂O₃ sol was added in the amount to provide a solid content of 5% by weight of total Al₂O₃ on Al₂O₃ basis. The water was added as appropriate so as to provide the slurry with a viscosity suitable for washcoating.

### [Preparation of samples]

### (Example 1)

A cordierite honeycomb carrier (partition wall thickness: 6 mil (0.15 mm), cell density: 400 cpsi (62 cells/cm²), porosity 30%) was first immersed in commercially available Al₂O₃ sol. Extra liquid in the cells was blown out, and then the carrier was dried. The supporting amount of the Al₂O₃ sol was adjusted to 50 g/L (honeycomb carrier volume) after firing. When the desired supporting amount cannot be achieved by one immersion and drying, the immersion and drying step was repeated until it is achieved. A resultant honeycomb body, which is a so-called primary carrier for carrying alumina (referred only to supporting carrier herein below), was calcined for one hour at 600 °C in an electric furnace. After the firing, the honeycomb body was repeatedly subjected as needed to the steps of washcoating the above-described slurry for washcoating the NOₓ trap catalyst (referred to "NOₓ trap catalyst slurry" for short herein below) and drying it until an NOₓ trap catalyst supporting amount of 100 g/L is attained, followed by firing again for one hour at 600 °C in an electric furnace to obtain an NOₓ trap catalyst 1.

### (Example 2)

An NOₓ trap catalyst 2 was obtained in a similar manner to Example 1 except changing the conditions of firing after supporting Al₂O₃ sol to three hours at 1200 °C.

### (Example 3)

An NOₓ trap catalyst 3 was obtained in a similar manner to Example 1 except using alumina-supporting slurry A instead of commercially available Al₂O₃ sol. The supporting amount of the alumina-supporting slurry A was adjusted such that the sum of the Al₂O₃ derived from a γ-Al₂O₃ powder and the Al₂O₃ derived from Al₂O₃ sol is 50 g/L after firing.

### (Example 4)

An NOₓ trap catalyst 4 was obtained in a similar manner to Example 3 except changing the conditions of firing after supporting the alumina-supporting slurry A to three hours at 1200 °C.

### (Example 5)

An NOₓ trap catalyst 5 was obtained in a similar manner to Example 3 except using alumina-supporting slurry B instead of the alumina-supporting slurry A.

### (Comparative Example 1)

The cordierite honeycomb carrier which is the same as the one used in Example 1 was repeatedly subjected as needed to the steps of washcoating the NOₓ trap catalyst slurry and drying it until an NOₓ trap catalyst supporting amount of 100 g/L is attained, followed by firing for one hour at 600 °C in an electric furnace to obtain an NOₓ trap catalyst 6.

### (Example 6)

An NOₓ trap catalyst 7 was obtained in a similar manner to Example 1 except repeating twice the steps of immersing the cordierite honeycomb carrier in Al₂O₃ sol, drying the carrier, and firing the honeycomb body for one hour at 600 °C in an electric furnace. The supporting amount of the Al₂O₃ sol was adjusted to be 80 g/L in total after the twice firing.

### (Example 7)

An NOₓ trap catalyst 8 was obtained in a similar manner to Example 2 except repeating twice the steps of immersing the cordierite honeycomb carrier in Al₂O₃ sol, drying the carrier, and firing the honeycomb body for three hours at 1200 °C in an electric furnace. The supporting amount of the Al₂O₃ sol was adjusted to be 80 g/L in total after the twice firing.

### [Durability test]

The NOₓ trap catalyst 1 to 8 obtained as described above were subjected to accelerated durability tests for 30 hours at 850 °C with 10 % steam in an electric furnace.

In addition, as a reference example, a cordierite honeycomb carrier, which supports nothing, was subjected to the accelerated durability test in a similar manner.

### [Evaluation of the effect of suppressing carrier deterioration]

For the NOₓ trap catalyst s 1 to 8, the presence or absence and many or few of the cracks in the carriers after the durability test were investigated by the appearance observation and the microstructure observation with an electron microscope. In addition, the initial bending strength and that after the durability test were comparatively investigated. The results are shown in Table 1.

**Table 1**

| | Number of NOₓ trap catalyst | Cracking (after durability test) | % reduction in bending strength {(initial strength - strength after durability test)/initial strength} ×100% |
|---|---|---|---|
| Example 1 | 1 | nothing | 35 |
| Example 2 | 2 | nothing | 28 |
| Example 3 | 3 | some | 46 |
| Example 4 | 4 | few | 34 |
| Example 5 | 5 | some | 39 |
| Example 6 | 7 | nothing | 23 |
| Example 7 | 8 | nothing | 22 |
| Comparative Example 1 | 6 | many | 75 |
| Reference Example | Carrier only | nothing | 1 |

As shown in Table 1, the NOₓ trap catalyst s 1 to 5 and 7 and 8 (Examples 1 to 7) according to the present invention exhibit suppressed occurrence of the cracks in the carriers and have suppressed reduction of the strength compared with the NOₓ trap catalyst 6 (Comparative Example 1) containing no alumina.

### Industrial Applicability

As described above, the catalyst according to the present invention places alumina, which has lower reactivity to an alkali metal and/or an alkaline earth metal to be used for a catalyst component, in advance in a carrier and/or between the carrier and a catalyst material, thereby protecting the carrier, even if exposed to high temperature, from the alkali metal and/or an alkaline earth metal in the catalyst material by the alumina to suppress the reaction with the carrier. Consequently, the deterioration of the carrier by an alkali metal and/or an alkaline earth metal is suppressed to enable extended periods of use of the catalyst.

## Claims

1. A catalyst comprising a cordierite carrier having a porosity of 10% or more and, supported on said carrier, a layer of a catalyst material containing an alkali metal and/or an alkaline earth metal, wherein to protect said cordierite carrier from reaction with said alkali metal or alkaline earth metal, the catalyst has
(i) alumina in the open pores of the carrier, or
(ii) a layer containing alumina and not containing any catalytic metals, in particular precious metals, alkali metals or alkaline earth metals, immediately adjacent the carrier and located between the carrier and said layer of catalyst material;
wherein in case (i) and in case (ii) said alumina comprises at least one of γ-alumina, δ-alumina, η-alumina, alumina and α-alumina.

2. The catalyst according to claim 1, wherein said alumina in the open pores of the carrier or in said layer containing alumina, is present as a material which is at least 90 wt% alumina.

3. The catalyst according to claim 1 or 2, wherein said catalyst material contains at least one precious metal selected from Pt, Pd and Rh.

4. The catalyst according to any of claims 1 to 3, wherein said carrier is a honeycomb carrier.

5. The catalyst according to claim 1, wherein said alumina contains α-alumina as a major component.

6. The catalyst according to any one of claims 1 to 5,
wherein the amount of said alumina to protect the cordierite carrier from said reaction is in the range 40-80 g/L per unit volume of the catalyst.

7. The catalyst according to any one of claims 1 to 6,
wherein the thickness of said layer containing alumina, in the direction perpendicular to the axial direction of the carrier, is 20 µm or less.

8. A method for producing a catalyst according to claim 1, including the steps of:
(i) supporting alumina, or a source for alumina which converts to alumina in step (ii), on a cordierite carrier having a porosity of 10% or more, to obtain a primary carrier, said alumina or source for alumina being in the form of either:
alumina, or said source for alumina, in the open pores of the carrier, or
a layer containing alumina and not containing any catalytic metals, in particular precious metals, alkali metals or alkaline earth metals, immediately adjacent the carrier;
(ii) firing the resultant primary carrier;
wherein the alumina in the primary carrier after step (ii) comprises at least one of γ-alumina, δ-alumina, η-alumina, θ-alumina and α-alumina; and
(iii) after step (ii), supporting a layer of catalyst material on the carrier, the catalyst material containing an alkali metal and/or an alkaline earth metal.

9. The method according to claim 8, wherein in step (ii) the firing of said resultant primary carrier is at a temperature of 200°C or above.

10. The method according to claim 8 or 9, wherein in step (ii), the firing of said primary carrier is at a temperature at which the supported alumina changes its phase.

11. The method according to claim 10, wherein in step (ii), the firing of said primary carrier is at a temperature at which at least a part of the supported alumina changes its phase to α-alumina.

## Patentansprüche

1. Katalysator, umfassend einen Cordieritträger mit einer Porosität von 10 % oder mehr und eine auf dem Träger getragene Schicht eines Katalysatormaterials, das ein Alkalimetall und/oder Erdalkalimetall enthält, wobei der Katalysator zum Schutz des Cordieritträgers vor einer Reaktion mit dem Alkalimetall oder Erdalkalimetall Folgendes aufweist:
(i) Aluminiumoxid in den offenen Poren des Trägers oder
(ii) eine Schicht, die Aluminiumoxid und keine katalytischen Metalle, insbesondere Edelmetalle, Alkalimetalle oder Erdalkalimetalle enthält, und die unmittelbar benachbart zu dem Träger und zwischen dem Träger und der Katalysatormaterialschicht angeordnet ist;
wobei in Fall (i) und in Fall (ii) das Aluminiumoxid zumindest ein aus γ-Aluminiumoxid, δ-Aluminiumoxid, η-Aluminiumoxid, θ-Aluminiumoxid und α-Aluminiumoxid ausgewähltes Element umfasst.

2. Katalysator nach Anspruch 1, worin das Aluminiumoxid in den offenen Poren des Trägers oder in der Aluminiumoxid enthaltenden Schicht als Material vorhanden ist, das zumindest zu 90 Gew.-% Aluminiumoxid ist.

3. Katalysator nach Anspruch 1 oder 2, worin das Katalysatormaterial zumindest ein aus Pt, Pd und Rh ausgewähltes Edelmetall enthält.

4. Katalysator nach einem der Ansprüche 1 bis 3, worin der Träger ein wabenförmiger Träger ist.

5. Katalysator nach Anspruch 1, worin das Aluminiumoxid α-Aluminiumoxid als Hauptkomponente enthält.

6. Katalysator nach einem der Ansprüche 1 bis 5, worin die Menge des Aluminiumoxids zum Schutz des Cordieritträgers vor der Reaktion im Bereich von 40 bis 80 g/L pro Volumeneinheit des Katalysators beträgt.

7. Katalysator nach einem der Ansprüche 1 bis 6, worin die Dicke der aluminiumoxidhältigen Schicht in der Richtung, die im rechten Winkel auf die axiale Richtung des Trägers steht, 20 µm oder weniger beträgt.

8. Verfahren zur Herstellung eines Katalysators nach Anspruch 1, einschließlich folgender Schritte:
(i) Tragen von Aluminiumoxid oder einer Aluminiumoxidquelle, die in Schritt (ii) sich in Aluminiumoxid umwandelt, auf einem Cordieritträger mit einer Porosität von 10 % oder mehr zum Erhalt eines primären Trägers, wobei das Aluminiumoxid oder die Aluminiumoxidquelle entweder
in Form von Aluminiumoxid oder der Aluminiumoxidquelle in den offenen Poren des Trägers oder
in Form einer Schicht vorliegt, die Aluminiumoxid und keine katalytischen Metalle, insbesondere Edelmetalle, Alkalimetalle oder Erdalkalimetalle enthält, unmittelbar benachbart zum Träger angeordnet ist;
(ii) Brennen des resultierenden primären Trägers;
wobei das Aluminiumoxid in dem primären Träger nach Schritt (ii) zumindest ein aus γ-Aluminiumoxid, δ-Aluminiumoxid, η-Aluminiumoxid, θ-Aluminiumoxid und α-Aluminiumoxid ausgewähltes Element umfasst und
(iii) nach Schritt (ii), Tragen einer Schicht Katalysator-Material auf dem Träger,
wobei das Katalysator-Material ein Alkalimetall und/oder ein Alkalierdmaterial umfasst.

9. Verfahren nach Anspruch 8, worin in Schritt (ii) das Brennen des resultierenden primären Trägers bei einer Temperatur von 200 °C oder mehr erfolgt.

10. Verfahren nach Anspruch 8 oder 9, worin in Schritt (ii) das Brennen des primären Trägers bei einer Temperatur erfolgt, in dem das getragene Aluminiumoxid seine Phase ändert.

11. Verfahren nach Anspruch 10, worin in Schritt (ii) das Brennen des primären Trägers bei einer Temperatur erfolgt, bei der zumindest ein Teil des getragenen Aluminiumoxids seine Phase zu α-Aiuminiumoxid ändert.

## Revendications

1. Catalyseur comprenant un support de cordiérite ayant une porosité de 10 % ou plus et, supportée sur ledit support, une couche d'un matériau catalytique contenant un métal alcalin et/ou un métal alcalino-terreux, dans lequel afin de protéger ledit support de cordiérite d'une réaction avec ledit métal alcalin ou métal alcalino-terreux, le catalyseur possède
(i) de l'alumine dans les pores ouverts du support, ou
(ii) une couche contenant de l'alumine et ne contenant pas de métaux catalytiques, en particulier les métaux précieux, les métaux alcalins ou les métaux alcalino-terreux, immédiatement adjacente au support et située entre le support et ladite couche de matériau catalytique ;
dans lequel dans le cas (i) et dans le cas (ii), ladite alumine comprend au moins l'une parmi la γ-alumine, la δ-alumine, la η-alumine, la θ-alumine et la α-alumine.

2. Catalyseur selon la revendication 1, dans lequel ladite alumine dans les pores ouverts du support ou dans ladite couche contenant de l'alumine est présente en tant que matériau qui est composé d'au moins 90 % en poids d'alumine.

3. Catalyseur selon la revendication 1 ou 2, dans lequel ledit matériau catalytique contient au moins un métal précieux choisi parmi Pt, Pd et Rh.

4. Catalyseur selon l'une quelconque des revendications 1 à 3, dans lequel ledit support est un support en nid d'abeilles.

5. Catalyseur selon la revendication 1, dans lequel ladite alumine contient de la α-alumine en tant que composant majeur.

6. Catalyseur selon l'une quelconque des revendications 1 à 5, dans lequel la quantité de ladite alumine pour protéger le support de cordiérite de ladite réaction se situe dans la plage allant de 40 à 80 g/L par volume unitaire du catalyseur.

7. Catalyseur selon l'une quelconque des revendications 1 à 6, dans lequel l'épaisseur de ladite couche contenant de l'alumine, dans la direction perpendiculaire à la direction axiale du support, est de 20 µm ou moins.

8. Procédé de production d'un catalyseur selon la revendication 1, comprenant les étapes consistant à :
(i) supporter l'alumine, ou une source d'alumine qui se convertit en alumine à l'étape (ii), sur un support de cordiérite ayant une porosité de 10 % ou plus, pour obtenir un support primaire, ladite alumine ou source d'alumine étant sous l'une ou l'autre des formes suivantes :
l'alumine, ou ladite source d'alumine, dans les pores ouverts du support, ou
une couche contenant de l'alumine et ne contenant pas de métaux catalytiques, en particulier les métaux précieux, les métaux alcalins ou les métaux alcalino-terreux, immédiatement adjacente au support ;
(ii) cuire le support primaire résultant ;
dans lequel l'alumine dans le support primaire après l'étape (ii) comprend au moins l'une parmi la γ-alumine, la δ-alumine, la η-alumine, la θ-alumine et la α-alumine ; et
(iii) après l'étape (ii), supporter une couche de matériau catalytique sur le support, le matériau catalytique contenant un métal alcalin et/ou un métal alcalino-terreux.

9. Procédé selon la revendication 8, dans lequel dans l'étape (ii), la cuisson dudit support primaire résultant s'effectue à une température de 200 °C ou plus.

10. Procédé selon la revendication 8 ou 9, dans lequel dans l'étape (ii), la cuisson dudit support primaire s'effectue à une température à laquelle l'alumine supportée change de phase.

11. Procédé selon la revendication 10, dans lequel dans l'étape (ii), la cuisson dudit support primaire s'effectue à une température à laquelle au moins une partie de l'alumine supportée change sa phase en α-alumine.
